# EUROPEAN PATENT SPECIFICATION

(11) **EP 3 715 333 B1**
(45) Date of publication and mention of the grant of the patent: **27.03.2024**
(21) Application number: 19760228.7
(22) Date of filing: 21.02.2019
(51) Int. Cl.: C01G 53/00, C01B 35/12, H01M 4/36, H01M 4/525, H01M 4/505, H01M 4/485, H01M 4/62, H01M 10/052

(54) **POSITIVE ELECTRODE ACTIVE MATERIAL FOR SECONDARY BATTERY, PREPARATION METHOD THEREFOR, AND LITHIUM SECONDARY BATTERY COMPRISING SAME**
POSITIVELEKTRODENAKTIVMATERIAL FÜR EINE SEKUNDÄRBATTERIE, HERSTELLUNGSVERFAHREN DAFÜR UND LITHIUMSEKUNDÄRBATTERIE DAMIT
MATÉRIAU ACTIF D'ÉLECTRODE POSITIVE POUR BATTERIE SECONDAIRE, SA MÉTHODE DE PRÉPARATION, ET BATTERIE SECONDAIRE AU LITHIUM LE COMPRENANT

(30) Priority: 28.02.2018 KR 20180024858
(43) Date of publication of application: 30.09.2020
(73) Proprietor: LG CHEM, LTD., Yeongdeungpo-gu, Seoul 07336 (KR)
(72) Inventor: CHAE, Hwa Seok, Daejeon 34122 (KR); PARK, Sang Min, Daejeon 34122 (KR); PARK, Sin Young, Daejeon 34122 (KR); PARK, Hong Kyu, Daejeon 34122 (KR); KANG, Seong Hoon, Daejeon 34122 (KR)
(74) Representative: Hoffmann Eitle
(86) International application number: PCT/KR2019/002169
(87) International publication number: WO 2019/168301

(56) References cited:
- EP-A1- 2 654 109
- EP-A1- 2 698 351
- EP-A1- 3 272 710
- WO-A1-2017/095134
- KR-A- 20110 063 335
- KR-A- 20130 030 102
- KR-A- 20160 026 306
- KR-A- 20170 076 088
- KR-A- 20180 010 122
- US-A1- 2016 181 611

## Description

### TECHNICAL FIELD

The present invention relates to a positive electrode active material for a secondary battery, a method for preparing the same, and a lithium secondary battery including the same.

### BACKGROUND ART

In recent years, with the rapid spread of electronic devices using batteries, such as mobile phones, notebook computers, and electric vehicles, demands for secondary batteries, which are small in size, light in weight and relatively high in capacity, have been rapidly increased. Particularly, a lithium secondary battery is light in weight and has high energy density, so that it has attracted attention as a driving power source for portable devices. Accordingly, research and development efforts for improving the performance of the lithium secondary battery have been actively conducted.

In the lithium secondary battery in which an organic electrolyte solution or a polymer electrolyte solution is filled between a positive electrode and a negative electrode, which are respectively composed of active materials capable of intercalating and deintercalating lithium ions, electric energy is produced by oxidation and reduction reactions when the lithium ions are intercalated/deintercalated into/from the positive and negative electrodes.

A lithium cobalt oxide (LiCoO₂), a lithium nickel oxide (LiNiO₂), a lithium manganese oxide (LiMnO₂, LiMn₂O₄, etc.), a lithium iron phosphate compound (LiFePO₄), or the like has been used as a positive electrode active material for a lithium secondary battery. In addition, as a method for improving low thermal stability while maintaining an excellent reversible capacity of the LiNiO₂, a lithium complex metal oxide, in which a portion of nickel (Ni) is substituted with cobalt (Co) and manganese (Mn)/aluminum (Al) (hereinafter, simply referred to as 'NCM-based lithium complex transition metal oxide' or 'NCA-based lithium complex transition metal oxide'), has been developed. However, the conventionally developed NCM-based/NCA-based lithium complex transition metal oxide have a limitation to application because of insufficient capacity characteristics.

In order to improve such a limitation, studies for increasing a content of Ni in the NCM-based/NCA-based lithium complex transition metal oxide have been recently conducted. However, in the case of a high-concentration nickel positive electrode active material having a high nickel content, there are problems in that structural stability and chemical stability of the active material are deteriorated, and thermal stability is rapidly deteriorated. In addition, as the nickel content in the active material increases, the residual amount of lithium by-products, which exist in a form of LiOH and Li₂CO₃ on a surface of the positive electrode active material, increases, and accordingly, gas generation and swelling phenomenon are caused, thereby causing problems of life-time and stability deterioration of a battery.

US 2016/181611 A1 describes a composite cathode active material, including a nickel-based lithium transition metal oxide secondary particle, the nickel-based lithium transition metal oxide secondary particle including a coating layer containing lithium and cobalt on a surface of a primary particle of the secondary particle.

EP 3 272 710 A1 relates to a nickel-based active material including at least one secondary particle including an aggregate of two or more primary particles, wherein at least a portion of the secondary particle has a radial array structure, and a hetero-element compound is positioned between the primary particles.

EP 2 654 109 A1 concerns a positive electrode composition for nonaqueous electrolyte secondary battery comprising a lithium transition metal complex oxide and a boron compound comprising at least boron and oxygen.

KR 2018 0010122 A relates to a nickel-based active material for a lithium secondary battery comprising at least one secondary particle including aggregates of two or more primary particles, wherein at least one part of the secondary particle comprises a radial arrangement structure and a heterogeneous element compound is arranged between the primary particles.

Accordingly, development of a high-concentration nickel-rich positive electrode active material which is in conformity with high capacity, and also has a small residual amount of lithium by-products and excellent high temperature stability is required.

### DISCLOSURE OF THE INVENTION

### TECHNICAL PROBLEM

To overcome the above problems, an aspect of the present invention provides: a high-Ni positive electrode active material from which a residual amount of lithium by-products is small, and simultaneously, structural stability, excellent capacity characteristics, and high temperature stability are achieved; a method for preparing the same; and a positive electrode for a secondary battery and a lithium secondary battery including the same.

Another aspect of the present invention also provides a method for preparing a positive electrode active material capable of simplifying a coating process, which is performed to overcome a thermal stability problem of a high-Ni positive electrode active material, and reducing production time and process cost.

### TECHNICAL SOLUTION

According to an aspect of the present invention, there is provided a method for preparing a positive electrode active material for a secondary battery, the method including: providing a lithium complex transition metal oxide which contains nickel (Ni) and cobalt (Co), and contains at least one selected from the group consisting of manganese (Mn) and aluminum (Al); removing lithium by-products present on a surface of the lithium complex transition metal oxide by washing the lithium complex transition metal oxide with water; and mixing the washed lithium complex transition metal oxide, a cobalt (Co)-containing raw material, and a boron (B)-containing raw material and performing high-temperature heat treatment at a temperature of 600°C or higher.

According to another aspect of the present invention, there is provided a positive electrode active material for a secondary battery obtainable by the method above, the positive electrode active material including: a lithium complex transition metal oxide which contains nickel (Ni) and cobalt (Co), and contains at least one selected from the group consisting of manganese (Mn) and aluminum (Al); and a surface coating portion which is formed on surfaces of the lithium complex transition metal oxide particles, wherein the surface coating portion includes a cobalt-rich layer, which has a higher cobalt content than the lithium complex transition metal oxide, and a lithium boron oxide.

According to another aspect of the present invention, there are provided a positive electrode and a lithium secondary battery each including the positive electrode active material.

### ADVANTAGEOUS EFFECTS

According to the present invention, it is possible to provide a positive electrode active material with which deterioration of structural/chemical stability caused by increasing nickel (Ni) in a high-Ni positive electrode active material is improved, and high capacity and excellent thermal stability are achieved. In addition, a residual amount of lithium by-products of a high-Ni positive electrode active material is reduced, and high-temperature life-time characteristics and output characteristics are improved.

Furthermore, according to the present invention, a surface coating portion is simultaneously formed in a high-temperature heat treatment step after water washing, thereby simplifying a process while overcoming a high-temperature stability problem, and reducing production time and process cost.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 is a graph showing heat flow depending on temperature by using a differential scanning calorimeter (Sensys evo DSC of SETARAM Instrumentation) for positive electrode active materials in Examples 1 and 2 and Comparative Examples 1 to 3;
FIG. 2 is a graph showing a capacity retention rate depending on a charge-discharge cycle of a battery cell manufactured by using positive electrode active materials in Examples 1 and 2 and Comparative Examples 1 to 3; and
FIG. 3 is a graph showing a resistance increase rate depending on a charge-discharge cycle of a battery cell manufactured by using positive electrode active materials in Examples 1 and 2 and Comparative Examples 1 to 3.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### <Method for preparing positive electrode active material>

The present invention provides a method for preparing a positive electrode active material for a secondary battery, the method including: providing a lithium complex transition metal oxide which contains nickel (Ni) and cobalt (Co), and contains at least one selected from the group consisting of manganese (Mn) and aluminum (Al); removing lithium by-products present on a surface of the lithium complex transition metal oxide by washing the lithium complex transition metal oxide with water; and mixing the washed lithium complex transition metal oxide, a cobalt (Co)-containing raw material, and a boron (B)-containing raw material and performing high-temperature heat treatment at a temperature of 600°C or higher. Hereinafter, each step of the present invention will be described in more detail.

First, a lithium complex transition metal oxide, which contains nickel (Ni) and cobalt (Co), and contains at least one selected from the group consisting of manganese (Mn) and aluminum (Al), is provided.

The lithium complex transition metal oxide may be a high-Ni NCM-based/NCA-based lithium complex transition metal oxide having a nickel (Ni) content of 60 mol% or more with respect to the total transition metal content. More preferably, a content of nickel (Ni) with respect to the total transition metal content may be 70 mol% or more, and far more preferably, a content of nickel (Ni) may be 80 mol% or more. The content of nickel (Ni) with respect to the total transition metal content in the lithium complex transition metal oxide satisfies 60 mol% or more, whereby a high capacity may be ensured.

More specifically, the lithium complex transition metal oxide may be represented by Formula 1 below:

[Formula 1] LiₚNi_{1-(x1+y1+z1)}COₓ₁M^{a}_{y1}M^{b}_{z1}M^{c}_{q1}O₂₋ₐAₐ

In the formula above, M^{a} is at least one selected from the group consisting of Mn and Al, M^{b} is at least one selected from the group consisting of Zr, W, Mg, Al, Ce, Hf, Ta, La, Ti, Sr, Ba, Ge, V, Si, Nb, Mo, and Cr, M^{c} is at least one selected from the group consisting of Al, Zr, Ti, Mg, Ta, Nb, Mo, and Cr, A is at least one selected from the group consisting of P and F, 0.9≤p≤1.05, 0<x1≤0.3, 0<y1≤0.2, 0≤z1≤0.1, 0≤q1≤0.1, 0≤a<1, and 0<x1+y1+z1≤0.4.

In the lithium complex transition metal oxide of Formula 1, Li may be contained in an amount corresponding to p, that is, in an amount of 0.9≤p≤1.05. When p is less than 0.9, there is a possibility that the capacity is deteriorated, and when p exceeds 1.05, particles are sintered in a firing process, whereby preparation of a positive electrode active material may be difficult. Considering the remarkable improvement effect of the capacity characteristics of the positive electrode active material according to the Li content control and the balance of the sintering property in preparation of the active material, Li may be more preferably contained in an amount of 1.0≤P≤1.05.

In the lithium complex transition metal oxide of Formula 1, Ni may be contained in an amount corresponding to 1-(x1+y1+z1), for example, in an amount of 0.6≤1-(x1+y1+z1)<1. When the content of Ni in the lithium complex transition metal oxide of Formula 1 is 0.6 or more, a sufficient amount of Ni, which may contribute to charge and discharge, is ensured, thereby achieving the high capacity. More preferably, Ni may be contained in an amount of 0.80≤1-(x1+y1+z1)≤0.99.

In the lithium complex transition metal oxide of Formula 1, Co may be contained in an amount corresponding to x1, that is, in an amount of 0<x1≤0.3. When the content of Co in the lithium complex transition metal oxide of Formula 1 exceeds 0.3, there is a possibility of cost increase. Considering the remarkable improvement effect of the capacity characteristics according to the inclusion of Co, Co may be more specifically contained in an amount of 0.05≤x1≤0.2.

In the lithium complex transition metal oxide of Formula 1, M^{a} may be Mn or Al, or may be Mn and Al, and such a metal element may improve the stability of the active material, and as a result, improve the stability of the battery. Considering the improvement effect of the life-time characteristics, M^{a} may be contained in an amount corresponding to y1, that is, in an amount of 0<y1≤0.2. When y1 in the lithium complex transition metal oxide of Formula 1 exceeds 0.2, the output characteristics and capacity characteristics of the battery may rather be deteriorated, and M^{a} may be more specifically contained in an amount of 0.05≤y1≤0.2.

In the lithium complex transition metal oxide of Formula 1, M^{b} may be a doping element contained in a crystal structure of the lithium complex transition metal oxide, and M^{b} may be contained in an amount corresponding to z1, that is, in an amount of 0≤z1≤0.1.

In the lithium complex transition metal oxide of Formula 1, metal element M^{c} may not be contained in the structure of the lithium composite transition metal oxide, and the lithium complex transition metal oxide doped with M^{c} on a surface thereof may be prepared through a method in which when precursor and lithium source are mixed and fired, the M^{c} source may also be mixed and fired together, or after forming the lithium complex transition metal oxide, the M^{c} source may be separately added and fired. M^{c} may be contained in an amount corresponding to q1, that is, may be contained in an amount not deteriorating the positive electrode active material characteristics within a range of 0≤q1≤0.1.

In the lithium complex transition metal oxide of Formula 1, element A is an element which substitutes a portion of oxygen, and may be P and/or F, and element A may substitute oxygen in an amount corresponding to a, that is, in an amount of 0≤a<1.

The lithium complex transition metal oxide used in the present invention may be, for example, an NCM-based lithium complex transition metal oxide including nickel (Ni), cobalt (Co), and manganese (Mn), or NCA-based lithium complex transition metal oxide including nickel (Ni), cobalt (Co), and aluminum (Al). Alternatively, the positive electrode active material may be a four-component lithium complex transition metal oxide essentially including four components of nickel (Ni), cobalt (Co), manganese (Mn), and aluminum (Al). In the case of the four-component positive electrode active material, the stability may be improved and the life-time may be improved without deteriorating the output characteristic and capacity characteristic as compared with the NCM-based/NCA-based positive electrode active material.

The lithium complex transition metal oxide represented by Formula 1 may be prepared by a method, for example, in which a lithium complex transition metal oxide precursor, which contains nickel (Ni) and cobalt (Co), and contains at least one selected from the group consisting of manganese (Mn) and aluminum (Al), and a lithium-containing raw material are mixed, and then the mixture is fired at 600-900°C, but a method is not limited thereto.

The positive electrode active material precursor may be an NCM-based compound containing nickel (Ni), cobalt (Co), and manganese (Mn), or may be an NCA-based compound containing nickel (Ni), cobalt (Co), and aluminum (Al), or may be a four-component positive electrode active material precursor essentially containing four components of nickel (Ni), cobalt (Co), manganese (Mn), and aluminum (Al). Alternatively, it may be a positive electrode active material precursor further containing M^{b} in addition to nickel (Ni), cobalt (Co), manganese (Mn), and/or aluminum (Al). The positive electrode active material precursor may use a commercially available positive electrode active material precursor, or may be prepared according to a method for preparing a positive electrode active material precursor well-known in the art.

For example, the nickel-cobalt-manganese precursor may be prepared by that an ammonium cation-containing complex-forming agent and a basic compound are added into a transition metal solution including a nickel-containing raw material, a cobalt-containing raw material, and a manganese-containing raw material, and then a coprecipitation reaction is performed.

The nickel-containing raw material may be, for example, a nickel-containing acetate, nitrate, sulfate, halide, sulfide, hydroxide, oxide, or oxyhydroxide, and may specifically be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, fatty acid nickel salt, nickel halide, or a combination thereof, but the embodiment is not limited thereto.

The cobalt-containing raw material may be a cobalt-containing acetate, nitrate, sulfate, halide, sulfide, hydroxide, oxide, or oxyhydroxide, and may specifically be Co(OH)₂, CoOOH, Co(OCOCH₃)₂·4H₂O, Co(NO₃)₂·6H₂O, CoSO₄, Co(SO₄)₂·7H₂O, or a combination thereof, but the embodiment is not limited thereto.

The manganese-containing raw material may be, for example, a manganese-containing acetate, nitrate, sulfate, halide, sulfide, hydroxide, oxide, oxyhydroxide, or a combination thereof, and may specifically be a manganese oxide such as Mn₂O₃, MnO₂, or Mn₃O₄; a manganese salt such as MnCO₃, Mn(NO₃)₂, MnSO₄, manganese acetate, dicarboxylate manganese salt, manganese citrate, and fatty acid manganese salt; manganese oxyhydroxide; manganese chloride; or a combination thereof, but the embodiment is not limited thereto.

The transition metal solution may be prepared by adding the nickel-containing raw material, cobalt-containing raw material, and manganese-containing raw material into a solvent, specifically for example, water or a mixed solvent of an organic solvent (e.g., alcohol, etc.) which may be uniformly mixed with water, or may be prepared by mixing an aqueous solution of a nickel-containing raw material, an aqueous solution of a cobalt-containing raw material, and a manganese-containing raw material.

The ammonium cation-containing complex-forming agent may be, for example, NH₄OH, (NH₄)₂SO₄, NH₄NO₃, NH₄Cl, CH₃COONH₄, NH₄CO₃, or a combination thereof, but the embodiment is not limited thereto. On the other hand, the ammonium cation-containing complex-forming agent may be used in a form of an aqueous solution, and as the solvent, water or a mixture of water and an organic solvent (specifically, alcohol, etc.) which may be uniformly mixed with water may be used.

The basic compound may be a hydroxide of an alkali metal or an alkaline earth metal such as NaOH, KOH, or Ca(OH)₂, a hydrate thereof, or a combination thereof. The basic compound may also be used in a form of an aqueous solution, and as the solvent, water or a mixture of water and an organic solvent (specifically, alcohol, etc.) which may be uniformly mixed with water may be used.

Meanwhile, although not essential, if necessary, the basic compound, in which an anionic compound containing element A, that is, P and/or F is dissolved, may be used. In this case, element A derived from the anionic compound is partially substituted in an oxygen position of the precursor, and accordingly, it is possible to obtain an effect of suppressing oxygen desorption and reaction with an electrolyte during charge and discharge of a secondary battery.

The basic compound is added to adjust a pH of a reaction solution, and may be added in an amount such that a pH of a metal solution becomes 11-13.

On the other hand, the coprecipitation reaction may be performed in an inert atmosphere such as a nitrogen or argon atmosphere at a temperature of 40-70°C.

Through the above-described process, particles of nickel-cobalt-manganese hydroxide are formed and precipitated in the reaction solution. The precipitated nickel-cobalt-manganese hydroxide particles may be separated and dried by a conventional method to obtain a nickel-cobalt-manganese precursor.

The positive electrode active material precursor prepared by the above-described method and a lithium-containing raw material may be mixed, or the positive electrode active material precursor, a lithium-containing raw material, and a M^{c}-containing raw material may be mixed, and then fired at 600-900°C, preferably at 600-800°C, to obtain a lithium complex transition metal oxide.

The M^{c}-containing raw material may be an element M^{c}-containing acetate, nitrate, sulfate, halide, sulfide, hydroxide, oxide, oxyhydroxide, or a combination thereof, and when M^{c} is Al, may be, for example, Al₂O₃, AlSO₄, AlCl₃, Al-isopropoxide, AlNO₃, or a combination thereof, but the embodiment is not limited thereto.

The lithium-containing raw material may be a lithium-containing sulfate, nitrate, acetate, carbonate, oxalate, citrate, halide, hydroxide, or oxyhydroxide, and is not particularly limited as long as dissolved in water. The lithium source may specifically be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, or Li₃C₆H₅O₇, and any one or a mixture of two or more thereof may be used.

Furthermore, although not essential, a A-containing raw material may be further mixed during the firing to dope a portion of oxygen in the lithium complex transition metal oxide with element A. At this time, the A-containing raw material may be, for example, Na₃PO₄, K₃PO₄, Mg₃(PO₄)₂, AlF₃, NH₄F, or LiF, but the embodiment is not limited thereto. When a portion of oxygen is substituted with element A as described above, it is possible to obtain an effect of suppressing oxygen desorption and reaction with an electrolyte during charge and discharge of a secondary battery.

Next, lithium by-products present on a surface of the lithium complex transition metal oxide are removed by washing the lithium complex transition metal oxide with water.

Since a lithium complex transition metal oxide containing a high concentration of nickel is structurally unstable as compared with a lithium complex transition metal oxide containing a low concentration of nickel, lithium by-products such as unreacted lithium hydroxide and lithium carbonate are more generated in a manufacturing process. For example, when a lithium complex metal oxide has a nickel fraction of less than 80 mol%, an amount of lithium byproduct after synthesis is about 0.5-0.6 wt%, whereas when a lithium complex metal oxide has a nickel fraction of 80 mol% or more, an amount of lithium by-products after synthesis is as high as about 1 wt%. On the other hand, when a large amount of lithium by-products is present in the positive electrode active material, the lithium by-products and an electrolyte react with each other to generate gas and swell, thereby remarkably deteriorating high temperature stability. Accordingly, a water washing step for removing the lithium by-products from a lithium complex transition metal oxide containing a high concentration of nickel is essentially required.

The water washing step may be performed, for example, by adding a lithium complex transition metal oxide into ultrapure water, and then stirring the mixture. At this time, washing temperature may be 20°C or less, preferably 10-20°C, and a washing time may be 10 minutes to 1 hour. When the washing temperature and washing time satisfy the above range, the lithium by-products may be effectively removed.

Thereafter, the washed lithium complex transition metal oxide, a cobalt (Co)-containing raw material, and a boron (B)-containing raw material are mixed and high-temperature heat treated. At this time, the high-temperature heat treatment may be performed at a temperature of 600°C or higher, more preferably 600-900°C, and far more preferably 700-900°C. The high-temperature heat treatment step is to improve structural stability and thermal stability by further removing lithium by-products and recrystallizing metallic elements in the positive electrode active material through a high-temperature heat treatment. In the case of a lithium complex transition metal oxide containing a high concentration of nickel, the water washing is performed to remove residual lithium by-products, and lithium in a crystal structure is also desorbed in addition to the lithium by-products during the water washing, thereby deteriorating degree of crystallinity and stability. Accordingly, the metal elements in the lithium complex transition metal oxide may be recrystallized by high-temperature heat treating the washed lithium complex transition metal oxide, thereby filling voids of lithium and improving surface stability.

In the heat treatment of the present invention, cobalt (Co)-containing raw material and boron (B)-containing raw material are mixed together and high-temperature heat treated. Conventionally, in order to improve thermal stability of the lithium complex transition metal oxide containing a high concentration of nickel, a coating process is separately performed at a low temperature after the high-temperature heat treatment, but there are problems of increasing production time and process cost due to an increase of the process step. Meanwhile, in the present invention, cobalt (Co)-containing raw material and boron (B)-containing raw material are mixed together in the high-temperature heat treatment step after water washing to simultaneously form a surface coating portion, thereby simplifying the process, and reducing the production time and process cost. In addition, it may be confirmed that thermal stability, high temperature life-time characteristics, and output characteristics are improved while overcoming the problems of increasing process time and cost due to the positive electrode active material having a surface coating portion manufactured as described above.

The cobalt (Co)-containing raw material may be a cobalt-containing acetate, nitrate, sulfate, halide, sulfide, hydroxide, oxide, or oxyhydroxide, and may specifically be Co(OH)₂, CoOOH, Co(OCOCH₃)₂·4H₂O, Co(NO₃)₂·6H₂O, Co(SO₄)₂·7H₂O, or a combination thereof, but the embodiment is not limited thereto.

The cobalt (Co)-containing raw material may be mixed in an amount of 0.001-0.01 parts by weight, preferably 0.002-0.008 parts by weight, with respect to 100 parts by weight of the lithium complex transition metal oxide. When the content of the cobalt (Co)-containing raw material satisfies the above range, the output characteristics may be effectively improved without inhibiting the capacity characteristics of the lithium complex transition metal oxide. Specifically, when the amount is less than 0.001 parts by weight, the output improvement effect is insignificant, and when the amount exceeds 0.01 parts by weight, nickel in the lithium composite transition metal oxide may be substituted with cobalt, thereby deteriorating the capacity characteristics.

The boron (B)-containing raw material may contain at least one selected from the group consisting of B₄C and B₂O₃, and may use more preferably B₄C. Since B₄C, in which carbon and boron are covalently bonded, has a relatively high melting point, a lithium boron oxide may be effectively formed without decomposition even when heat treated at 600°C or higher. On the other hand, since H₃BO₃, which is generally used as a boron (B)-containing raw material, has a low melting point, a lithium boron oxide may not be formed due to a decomposition reaction when heat treated at 400°C or higher.

The boron (B)-containing raw material may be mixed in an amount of 0.0001-0.001 parts by weight, preferably 0.0002-0.0008 parst by weight, with respect to 100 parts by weight of the lithium complex transition metal oxide. When the content of the boron (B)-containing raw material satisfies the above range, the capacity and high-temperature life-time characteristics of the positive electrode active material may be effectively improved. Specifically, when the amount is less than 0.0001 parts by weight, the capacity improvement effect may be insignificant, and when the amount exceeds 0.001 parts by weight, the reactivity with lithium may be increased, thereby rather deteriorating the capacity and high-temperature life-time characteristics.

As described above, when the cobalt (Co)-containing raw material and boron (B)-containing raw material are further mixed to perform the high-temperature heat treatment, the surface of the lithium complex transition metal oxide is coated with a cobalt component during the high-temperature heat treatment to form a cobalt-rich layer having a relatively higher cobalt content than an inside of the lithium complex transition metal oxide, and the lithium by-products of the lithium complex transition metal oxide reacts with boron to form a lithium boron oxide. When the surface coating portion including the cobalt-rich layer and lithium boron oxide is formed on the surface of the lithium complex transition metal oxide as described above, the effects of improving the output characteristics and thermal stability may be obtained.

Meanwhile, the heat treatment is performed in an oxidization atmosphere, for example, an oxygen atmosphere. Specifically, the heat treatment may be performed while supplying oxygen at a flow rate of 0.5-10 L/min, preferably 1-5 L/min. When the heat treatment is performed in an oxidization atmosphere as in the present invention, the lithium by-products may be effectively removed. According to the studies of the present inventors, the effect of removing lithium by-products is significantly deteriorated when the heat treatment is performed in the atmosphere, and particularly, the amount of lithium by-products is increased rather than before the heat treatment when the heat treatment is performed at 700°C or higher in the atmosphere.

Furthermore, the high-temperature heat treatment may be performed at a temperature of 600°C or higher, for example, 600-900°C, more preferably 700-900°C for 10 hours or less, for example, 1-10 hours. When the heat treatment temperature and time satisfy the above range, the effect of improving the thermal stability may be excellent. According to the studies of the present inventors, the thermal stability improvement effect is hardly exhibited when the heat treatment temperature is less than 600°C.

### <Positive electrode active material for secondary battery>

Next, a positive electrode active material for a secondary battery obtainable by the method according to the present invention will be described.

The positive electrode active material for a secondary battery prepared obtainable by the method according to the present invention includes: a lithium complex transition metal oxide which contains nickel (Ni) and cobalt (Co), and contains at least one selected from the group consisting of manganese (Mn) and aluminum (Al); and a surface portion which is formed on surfaces of the lithium complex transition metal oxide particles, wherein the surface portion includes a cobalt-rich layer, which has a higher cobalt content than the lithium complex transition metal oxide, and a lithium boron oxide.

The lithium complex transition metal oxide may be a high-Ni NCM-based/NCA-based lithium complex transition metal oxide having a nickel (Ni) content of 60 mol% or more with respect to the total transition metal content. More preferably, a content of nickel (Ni) with respect to the total transition metal content may be 70 mol% or more, and far more preferably, a content of nickel (Ni) may be 80 mol% or more. The content of nickel (Ni) with respect to the total transition metal content in the lithium complex transition metal oxide satisfies 60 mol% or more, whereby a high capacity may be ensured.

More specifically, the lithium complex transition metal oxide may be represented by Formula 1 below:

[Formula 1] LiₚNi_{1-(x1+y1+z1)}COₓ₁M^{a}_{y1}M^{b}_{z1}M^{c}_{q1}O₂₋ₐAₐ

In the formula above, M^{a} is at least one selected from the group consisting of Mn and Al, M^{b} is at least one selected from the group consisting of Zr, W, Mg, Al, Ce, Hf, Ta, La, Ti, Sr, Ba, Ge, V, Si, Nb, Mo, and Cr, M^{c} is at least one selected from the group consisting of Al, Zr, Ti, Mg, Ta, Nb, Mo, and Cr, A is at least one selected from the group consisting of P and F, 0.9≤p≤1.05, 0<x1≤0.3, 0<y1≤0.2, 0≤z1≤0.1, 0≤q1≤0.1, 0≤a<1, and 0<x1+y1+z1≤0.4. Specific specifications of the lithium complex transition metal oxide represented by [Formula 1] above are the same as those described in the above-described preparing method, and accordingly, a detailed description thereof will be omitted.

The cobalt-rich layer is formed by mixing a lithium complex transition metal oxide and a cobalt (Co)-containing raw material, and the coating a surface of the lithium complex transition metal oxide with a cobalt component derived from the cobalt-containing raw material in a high-temperature heat treatment process, and contains a relatively large amount of cobalt as compared with the lithium complex metal oxide.

Specifically, a difference between a ratio (hereinafter, referred to as a 'cobalt atomic fraction') of the number of cobalt atoms to the total number of atoms of metal elements other than lithium in the cobalt-rich layer (i.e., the sum of the atom numbers of nickel, cobalt, manganese, and aluminum) and a cobalt atomic fraction of the lithium complex transition metal oxide may be about 0.05-0.2, preferably about 0.05-0.15. More specifically, an atomic fraction of cobalt among nickel, cobalt, manganese, and aluminum in the cobalt-rich layer (i.e., a ratio of the number of cobalt atoms to the sum of the atom numbers of nickel, cobalt, manganese, and M) may be 0.05-0.45, preferably 0.05-0.35. When the cobalt atomic fraction in the cobalt-rich layer satisfies the above range, the output characteristics of the lithium complex transition metal oxide may be effectively improved without inhibiting the capacity characteristics thereof.

The lithium boron oxide is formed by mixing a lithium complex transition metal oxide and a boron (B)-containing raw material, and then reacting lithium by-products of the lithium complex transition metal oxide and boron in a high-temperature heat treatment process.

Specifically, boron (B) contained in the lithium boron oxide may be contained in an amount of 100-1,000 ppm, preferably 200-500 ppm, with respect to the total weight of the positive electrode active material. When the content of boron (B) satisfies the above range, the high-temperature stability may be effectively improved, and the capacity and high-temperature life-time characteristics may be improved.

When the surface coating portion including the cobalt-rich layer and lithium boron oxide is formed on the surface of the lithium complex transition metal oxide as described above, the output characteristics and thermal stability are improved.

The surface coating portion may have a thickness of 10-100 nm, preferably 30-70 nm. When the thickness of the surface coating portion exceeds 100 nm, an initial discharge capacity is decreased and the surface coating portion may act as a resistive layer which hinders movement of lithium, and when the thickness of the surface coating portion is less than 30 nm, the output, thermal stability, and cycle characteristics may be deteriorated.

The positive electrode active material obtainable by the method according to the present invention is prepared by that a high-temperature heat treatment is performed in an oxidization atmosphere after washing with water, and a surface coating portion including a cobalt rich layer and a lithium boron oxide is formed during a high-temperature heat treatment, and accordingly, the residual amount of lithium by-products is remarkably small as compared with a conventional high-concentration nickel-containing positive electrode active material, and the excellent high-temperature stability may be realized.

In the positive electrode active material according to the present invention, a content of the lithium by-products may satisfy 0.55 wt% or less, preferably 0.53 wt% or less, more preferably 0.50 wt% or less with respect to the total weight of the positive electrode active material. Accordingly, when a secondary battery is manufactured by using the positive electrode active material according to the present invention, gas generation and swelling phenomenon may be effectively inhibited during charge and discharge.

When a heat flow is measured by differential scanning calorimetry (DSC), the positive electrode active material according to the present invention may have a main peak in a temperature range of 220-250°C, preferably 230-240°C, more preferably 234-240°C, and a heat flow thereof may satisfy 2,000 W/g or less, preferably 1,800 W/g or less, more preferably 1,750 W/g or less. When the high-temperature heat treatment is not performed after water washing, when the heat treatment temperature and atmosphere do not satisfy the conditions of the present invention even when the high-temperature heat treatment is performed, or when the surface coating portion is not formed, a peak appears at a relatively low temperature, and a high heat flow value appears exceeding 2,000 W/g. When such a positive electrode active material having a peak in a low temperature range and a high heat flow is used, if the internal temperature of a battery rises due to overcharging, etc., the heat flow may rapidly increase and explosion may occur. Meanwhile, the positive electrode active material of the present invention has a relatively high temperature range in which a peak appears and a small amount of heat flow, and accordingly, the possibility of explosion is low even when the internal temperature of a battery rises due to overcharging, etc.

### <Positive electrode and secondary battery>

According to another embodiment of the present invention, there is provided a positive electrode for a lithium secondary battery and a lithium secondary battery including the positive electrode active material.

Specifically, the positive electrode includes a positive electrode current collector and a positive electrode active material layer which is formed on the positive electrode current collector and contains the positive electrode active material.

In the positive electrode, the positive electrode current collector is not particularly limited as long as having conductivity without causing any chemical changes in a battery, and for example, stainless steel, aluminum, nickel, titanium, sintered carbon, or aluminum or stainless steel of which a surface is surface-treated with carbon, nickel, titanium, silver, etc. may be used. In addition, the positive electrode current collector may conventionally have a thickness of 3-500 µm, and fine unevenness may be formed on a surface of the positive electrode current collector to enhance adhesion of the positive electrode active material. Various forms such as film, sheet, foil, net, porous body, foam, and nonwoven fabric may be used.

Furthermore, the positive electrode active material layer may include a conductive material and a binder in addition to the above-described positive electrode active material.

The conductive material is used for imparting conductivity to an electrode, and may be used without particular limitation as long as having electronic conductivity without causing any chemical changes in the constituted battery. Specific examples thereof may include graphite (e.g., natural graphite or synthetic graphite); a carbon-based material (e.g., carbon black, acetylene black, Ketjen black, channel black, furnace black, lamp black, thermal black, or carbon fiber); a metal powder or metal fiber (e.g., copper, nickel, aluminum, or silver); conductive whisker (e.g., zinc oxide or potassium titanate); a conductive metal oxide (e.g., titanium oxide); or a conductive polymer (e.g., polyphenylene derivatives), and any one alone or a mixture of two or more thereof may be used. The conductive material may be conventionally contained in an amount of 1-30 wt% with respect to the total weight of the positive electrode active material layer.

In addition, the binder serves to improve adhesion between the positive electrode active material particles and adhesion between the positive electrode active material and positive electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylenepropylene-diene monomer (EPDM), sulfonated-EPDM, styrene butadiene rubber (SBR), fluorine rubber, or various copolymers thereof, and any one alone or a mixture of two or more thereof may be used. The binder may be contained in an amount of 1-30 wt% with respect to the total weight of the positive electrode active material layer.

The positive electrode may be produced according to the typical positive electrode producing method, except that the positive electrode uses the above-described positive electrode active material. Specifically, the positive electrode may be produced through which a composition for forming a positive electrode active material layer which includes the above-described positive electrode active material, and optionally, a binder and a conductive material, is applied on the positive electrode current collector, and then dried and rolled. Here, the types and contents of the positive electrode active material, binder, and conductive material are the same as those described above.

Solvents generally used in the art may be used as the solvent, and examples thereof may include dimethyl sulfoxide (DMSO), isopropyl alcohol, N-methylpyrrolidone (NMP), acetone, water, etc., and any one alone or a mixture of two or more thereof may be used. An amount of the solvent to be used is sufficient to dissolve or disperse the positive electrode active material, conductive material, and binder in consideration of the applying thickness of a slurry and manufacturing yield, and to have a viscosity capable of exhibiting excellent thickness uniformity when afterward applied for producing the positive electrode.

Alternatively, the positive electrode may be produced by casting the composition for forming a positive electrode active material layer on a separate support, and then laminating a film, which is obtained by peeling off the support, on the positive electrode current collector.

According to another embodiment of the present invention, there is provided an electrochemical device including the positive electrode. The electrochemical device may specifically be a battery, a capacitor, etc., and more specifically, may be a lithium secondary battery.

The lithium secondary battery specifically includes: a positive electrode; a negative electrode disposed to face the positive electrode; a separator disposed between the positive electrode and negative electrode; and an electrolyte, and the positive electrode is the same as that described above. In addition, the lithium secondary battery may optionally further include: a battery container for storing an electrode assembly of the positive electrode, negative electrode, and separator; and a sealing member for sealing the battery container.

In the lithium secondary battery, the negative electrode includes a negative electrode current collector and a negative electrode active material layer disposed on the negative electrode current collector.

The negative electrode current collector is not particularly limited as long as having high conductivity without causing any chemical changes in a battery, and for example, copper, stainless steel, aluminum, nickel, titanium, sintered carbon, copper or stainless steel of which a surface is surface-treated with carbon, nickel, titanium, silver, etc., or an aluminum-cadmium alloy may be used. In addition, the negative electrode current collector may conventionally have a thickness of 3-500 um, and similarly to the positive electrode collector, fine unevenness may be formed on a surface of the current collector to enhance adhesion of the negative electrode active material. Various forms such as film, sheet, foil, net, porous body, foam, and nonwoven fabric may be used.

The negative electrode active material layer optionally includes a binder and a conductive material in addition to the negative electrode active material. As an embodiment, the negative electrode active material layer may be prepared by applying and drying a composition for forming a negative electrode which includes a negative electrode active material, and optionally a binder and a conductive material, on a negative electrode current collector, or alternatively, by casting the composition for forming a negative electrode on a separate support, and then laminating a film, which is obtained by peeling off the support, on the negative electrode current collector.

A compound capable of reversible intercalation and deintercalation of lithium may be used as the negative electrode active material. Specific examples thereof may include a carbonaceous material (e.g., artificial graphite, natural graphite, a graphitized carbon fiber, or amorphous carbon); a metallic compound capable of alloying with lithium (e.g., Si, Al, Sn, Pb, Zn, Bi, In, Mg, Ga, Cd, a Si alloy, a Sn alloy, or an Al alloy); a metal oxide capable of doping and un-doping lithium (e.g., SiO_{α} (0<α<2), SnO₂, vanadium oxide, or lithium vanadium oxide); or a composite containing the metallic compound and the carbonaceous material (e.g., a Si-C composite or a Sn-C composite), and any one alone or a mixture of two or more thereof may be used. A metallic lithium thin film may also be used as the negative electrode active material. In addition, both low-crystalline carbon and high-crystalline carbon may be used as the carbon material. As typical examples of the low-crystalline carbon, soft carbon or hard carbon may be used, and as typical examples of the high-crystalline carbon, natural graphite or artificial graphite in a form of being amorphous, planar, scaly, spherical, or fibrous; Kish graphite; pyrolytic carbon; mesophase pitch-based carbon fibers; meso-carbon microbeads; mesophase pitches; or high-temperature sintered carbon such as petroleum or coal tar pitch derived cokes may be used.

Furthermore, the binder and the conductive material may be the same as those in the positive electrode described above.

Meanwhile, in the lithium secondary battery, the separator serves to separate the negative electrode and the positive electrode from each other, and provide a transfer channel of lithium ions, and any separator may be used as the separator without particular limitation as long as conventionally used in a lithium secondary battery. Particularly, a separator having excellent electrolyte-retention ability as well as low resistance to transfer of the electrolyte ions may be preferably used. Specifically, a porous polymer film formed of a polyolefin-based polymer such as ethylene homopolymer, propylene homopolymer, ethylene/butene copolymer, ethylene/hexene copolymer, or ethylene/methacrylate copolymer, or a laminated structure having two or more layers thereof may be used. A conventional porous nonwoven fabric, for example, a nonwoven fabric formed of glass fibers or polyethylene terephthalate fibers, which has a high melting point, may also be used. In addition, a coated separator containing a ceramic component or a polymer material may be used to ensure heat resistance or mechanical strength, and either a single-layer structure or a multi-layer structure may be optionally used.

Furthermore, as examples of the electrolyte used in the present invention, an organic-based liquid electrolyte, an inorganic-based liquid electrolyte, a solid polymer electrolyte, a gel-type polymer electrolyte, a solid inorganic electrolyte, or a molten-type inorganic electrolyte which is available in the manufacture of the lithium secondary battery may be used, but the embodiment is not limited thereto.

Specifically, the electrolyte may include an organic solvent and a lithium-salt.

The organic solvent may be used without particular limitation as long as the organic solvent may serve as a medium through which ions involved in the electrochemical reaction of the battery may be transferred. Specifically, as examples of the organic solvent, an ester-based solvent (e.g., methyl acetate, ethyl acetate, γ-butyrolactone, or ε-caprolactone); an ether-based solvent (e.g., dibutyl ether or tetrahydrofuran); a ketone-based solvent (e.g., cyclohexanone); an aromatic hydrocarbon-based solvent (e.g., benzene or fluorobenzene); a carbonate-based solvent (e.g., dimethylcarbonate (DMC), diethylcarbonate (DEC), methylethylcarbonate (MEC), ethylmethylcarbonate (EMC), ethylene carbonate (EC), or propylene carbonate (PC)); an alcohol-based solvent (e.g., ethyl alcohol or isopropyl alcohol); nitriles (e.g., R-CN where R is a linear, branched, or cyclic hydrocarbon group having C2 to C20, and may contain a double-bond aromatic ring or ether-bond.); amides (e.g., dimethylformamide); dioxolanes (e.g., 1,3-dioxolane); or sulfolanes may be used. Among these examples, the carbonate-based solvent may be preferably used, and a mixture of cyclic carbonate (e.g., ethylene carbonate or propylene carbonate), which has high ionic conductivity and high dielectric constant to increase charge and discharge properties of a battery, and low-viscosity linear carbonate-based compound (e.g., ethylmethylcarbonate, dimethylcarbonate, or diethylcarbonate) may be more preferably used. In this case, when the cyclic carbonate and chain carbonate are mixed at a volume ratio of about 1:1 to 1:9, the electrolyte may exhibit excellent performance.

The lithium-salt may be used without particular limitation as long as a compound capable of providing lithium ions used in a lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium-salt. The lithium-salt may be preferably used in a concentration range of 0.1-2.0 M. When a concentration of the lithium-salt is included within the above range, the electrolyte has suitable conductivity and viscosity, thereby exhibiting excellent performance of an electrolyte and effectively transferring lithium ions.

In addition to the electrolyte components, to improve life-time characteristics of a battery, inhibit capacity reduction of a battery, and improve discharge capacity of a battery, the electrolyte may further include at least one additive among, for example, halo-alkylene carbonate-based compound (e.g., difluoroethylene carbonate), pyridine, triethylphosphite, triethanolamine, cyclic ether, ethylene diamine, n-glyme, hexaphosphoric triamide, nitrobenzene derivative, sulfur, quinone imine dye, N-substituted oxazolidinone, N,N-substituted imidazolidine, ethylene glycol dialkyl ether, ammonium-salt, pyrrole, 2-methoxy ethanol, aluminum trichloride, etc. In this case, the additive may be included in an amount of 0.1-5 wt% with respect to the total weight of the electrolyte.

As described above, since the lithium secondary battery including the positive electrode active material according to the present invention stably exhibits the excellent discharge capacity, output characteristics, and capacity retention rate, the lithium secondary battery is useful in portable devices (e.g., a mobile phone, notebook computer, or digital camera) and electric vehicle industries (e.g., hybrid electric vehicles (HEVs)).

Accordingly, according to another embodiment of the present invention, there are provided a battery module including the lithium secondary battery as a unit cell and a battery pack including the same.

The battery module or the battery pack may be used as a power source of a medium- or large-sized device for at least one of a power tool; electric vehicles including electric vehicle (EV), hybrid electric vehicle, and plug-in hybrid electric vehicle (PHEV); or a power storage system.

Hereinafter, the present invention will be described in more detail according to examples. However, the invention may be embodied in many different forms and should not be construed as being limited to the embodiments set forth herein.

### Example 1

300 g of lithium complex transition metal oxide LiNi_{0.86}Co_{0.1}Mn_{0.02}Al_{0.02}O₂ was added into 300 mL of ultrapure water, and stirred for 30 minutes to wash with water, and then filtering was performed for 20 minutes. The filtered lithium complex transition metal oxide was dried in a vacuum oven at 130°C, and then sieving was performed. Thereafter, with respect to 100 parts by weight of the lithium complex transition metal oxide, 0.0078 parts by weight (Co: 5000 ppm) of Co(OH)₂ and 0.0004 parts by weight (B: 300 ppm) of B₄C were mixed, and high-temperature heat treatment was performed at 700°C for 5 hours while supplying oxygen at a flow rate of 1 L/min to prepare a positive electrode active material.

### Example 2

A positive electrode active material was prepared in the same manner as in Example 1 except that, with respect to 100 parts by weight of the lithium complex transition metal oxide, 0.0031 parts by weight (Co: 2000 ppm) of Co(OH)₂ and 0.0004 parts by weight (B: 300 ppm) of B₄C were mixed.

### Comparative Example 1

A positive electrode active material was prepared in the same manner as in Example 1 except that Co(OH)₂ and B₄C were not mixed during high-temperature heat treatment.

### Comparative Example 2

300 g of lithium complex transition metal oxide LiNi_{0.86}Co_{0.1}Mn_{0.02}Al_{0.02}O₂ was added into 300 mL of ultrapure water, and stirred for 30 minutes to wash with water, and then filtering was performed for 20 minutes. The filtered lithium complex transition metal oxide was dried in a vacuum oven at 130°C, and then sieving was performed. Thereafter, 0.0078 parts by weight (Co: 5000 ppm) of Co(OH)₂ with respect to 100 parts by weight of the lithium complex transition metal oxide was mixed, and high-temperature heat treatment was performed at 700°C for 5 hours while supplying oxygen at a flow rate of 1 L/min, and then filtering was performed. Thereafter, 0.0057 parts by weight (B: 1,000 ppm) of H₃BO₃ was mixed, and heat treatment was performed at 300°C for 3 hours in an air atmosphere to prepare a positive electrode active material.

### Comparative Example 3

300 g of lithium complex transition metal oxide LiNi_{0.86}Co_{0.1}Mn_{0.02}Al_{0.02}O₂ was added into 300 mL of ultrapure water, and stirred for 30 minutes to wash with water, and then filtering was performed for 20 minutes. The filtered lithium complex transition metal oxide was dried in a vacuum oven at 130°C, and then sieving was performed. Thereafter, 0.0057 parts by weight (B: 1,000 ppm) of H₃BO₃ with respect to 100 parts by weight of the lithium complex transition metal oxide was mixed, and heat treatment was performed at 300°C for 3 hours in an air atmosphere to prepare a positive electrode active material.

### [Experimental Example 1: Evaluation of heat flow]

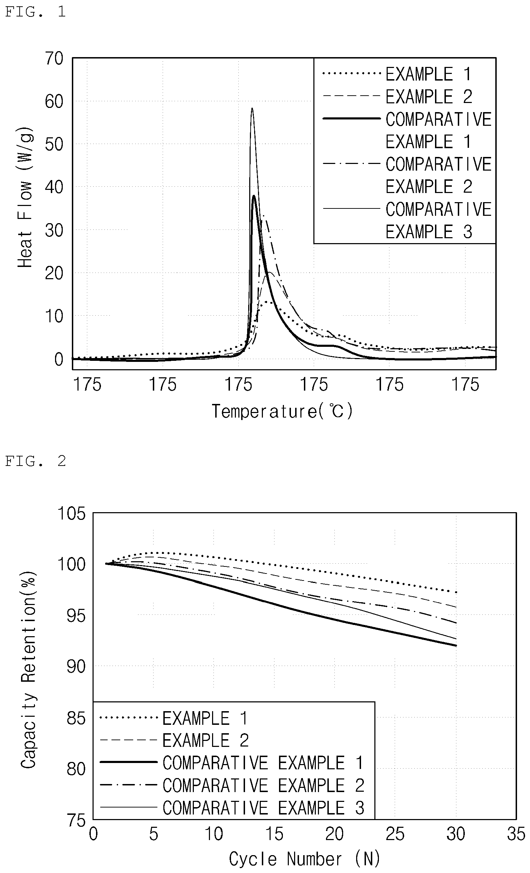

Heat flow according to temperature of the positive electrode active materials in Examples 1 and 2 and Comparative Examples 1 to 3 was measured by using a differential scanning calorimeter (Sensys evo DSC of SETARAM Instrumentation). Specifically, 16 mg of the positive electrode active material in Examples 1 and 2 and Comparative Examples 1 to 3 was added in a pressure-resistant pen for DSC measurement, and then 20 µL of an electrolyte (EVPS) was injected. A temperature range for DSC analysis was 25-400°C and a rate of temperature increase was 10°C/min. The DSC measurement was performed on each positive electrode active material 3 times or more and the average value was measured. The measurement results are shown in Table 1 and FIG. 1.

**[Table 1]**

| | Main peak (°C) | Heat flow (W/g) |
|---|---|---|
| Example 1 | 234.7 | 1,661 |
| Example 2 | 234.9 | 1,981 |
| Comparative Example 1 | 230.1 | 2,228 |
| Comparative Example 2 | 233.9 | 2,186 |
| Comparative Example 3 | 229.6 | 2,436 |

Referring to Table 1 above and FIG. 1, it could be confirmed that the positive electrode active materials in Examples 1 and 2 exhibited a main peak at 234°C or higher and a heat flow of less than 2,000 W/g, while the positive electrode active material in Comparative Example 1 exhibited a main peak at a relatively low temperature of about 230°C and a heat flow of exceeding 2,000 W/g. These results may indicate that the positive electrode active materials in Examples 1 and 2 have excellent thermal stability as compared with the positive electrode active material in Comparative Example 1. It could also be confirmed that the positive electrode active materials in Examples 1 and 2 exhibited a main peak at a relatively high temperature and a small amount of heat flow as compared with the positive electrode active materials in Comparative Examples 2 and 3.

### [Experimental Example 2: Evaluation of residual amount of lithium by-products]

5 g of the positive electrode active material prepared in Examples 1 and 2 and Comparative Examples 2 and 3 was dispersed in 100 mL of water, and then titrated with 0.1 M HCl to obtain a pH titration curve. LiOH residual amount and Li₂CO₃ residual amount in each positive electrode active material were calculated by using the pH titration curve, and the sum value thereof was evaluated as a total residual amount of lithium by-products, and the results are shown in Table 2 below.

**[Table 2]**

| | LiOH residual amount (wt%) | Li₂CO₃ residual amount (wt%) | Total residual amount of lithium by-products (wt%) |
|---|---|---|---|
| Example 1 | 0.413 | 0.085 | 0.498 |
| Example 2 | 0.343 | 0.142 | 0.485 |
| Comparative Example 2 | 0.327 | 0.229 | 0.556 |
| Comparative Example 3 | 0.365 | 0.176 | 0.541 |

Referring to Table 2 above, it could be confirmed that the residual amount of Li₂CO₃ was significantly decreased and the total residual amount of lithium by-products was reduced in the positive electrode active materials of Examples 1 and 2 as compared with the positive electrode active materials of Comparative Examples 2 and 3. Accordingly, it could be predicted that the positive electrode active materials in Examples 1 and 2 have an effect of suppressing gas generation and swelling.

### [Experimental Example 3: Evaluation of cycle characteristics]

Each of the positive electrode active materials prepared in Examples 1 and 2 and Comparative Examples 1 to 3, a carbon black conductive material, and a PVdF binder were mixed in an N-methylpyrrolidone solvent at a weight ratio of 95:2.5:2.5 to prepare a positive electrode mixture (viscosity: 5000 mPa.s), and the mixture was applied onto one surface of an aluminum current collector, and then dried at 130°C and rolled to produce a positive electrode.

Natural graphite as a negative electrode active material, a carbon black conductive material, and a PVdF binder were mixed in an N-methylpyrrolidone solvent at a weight ratio of 85:10:5 to prepare a composition for forming a negative electrode active material layer, and the composition was applied onto one surface of a copper current collector to produce a negative electrode.

A porous polyethylene separator was disposed between the positive electrode and negative electrode produced as described above to manufacture an electrode assembly, and the electrode assembly was disposed inside a case, and then an electrolyte was injected into the case to manufacture a lithium secondary battery. At this time, the electrolyte was prepared by dissolving lithium hexafluorophosphate (LiPF₆) at a concentration of 1.0 M in an organic solvent composed of ethylene carbonate/dimethyl carbonate/ethylmethyl carbonate (mixed volume ratio of EC/DMC/EMC=3/4/3).

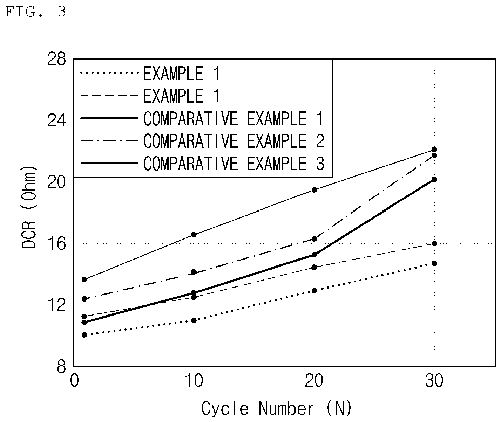

Capacity retention rate (%) and DCR resistance increase rate (%) of the lithium secondary battery as manufactured above were measured while charging and discharging were performed at 45°C for 30 cycles under the conditions of a charge end voltage of 4.25 V and a discharge end voltage of 2.5 V at 0.3 C/0.3 C. The measurement results are shown in FIGS. 2 and 3. FIG. 2 is a graph showing the capacity retention rate, and FIG. 3 is a graph showing the resistance increase rate.

Referring to FIGS. 2 and 3, it could be confirmed that in the case of the secondary battery to which the positive electrode active materials in Examples 1 and 2 were applied, the capacity reduction rate and resistance increase rate during the 30cycles charging and discharging were remarkably low as compared with the secondary battery to which the positive electrode active materials in Comparative Examples 1 to 3 were applied.

### [Experimental Example 4: Evaluation of discharge capacity change according to C rate]

The lithium secondary battery manufactured in the same manner as in Experimental Example 3 was charged at 25°C, a charging end voltage of 4.25 V and a discharge end voltage of 2.5 V, and 0.5 C, and then a discharge capacity change was measured during discharging at 0.1 C/0.2 C/0.33 C/0.5 C/1.0 C/2.0 C, respectively. The measurement results are shown in Table 3.

**[Table 3]**

| | | C rate | | | | | |
|---|---|---|---|---|---|---|---|
| | | 0.1 C | 0.2 C | 0.33 C | 0.5 C | 1.0 C | 2.0 C |
| Example 1 | Discharge capacity (mAh/g) | 205.3 | 199.9 | 196.0 | 192.7 | 186.8 | 180.4 |
| | Rate (%) | 100.0 | 97.4 | 95.5 | 93.9 | 91.0 | 87.9 |
| Example 2 | Discharge capacity (mAh/g) | 205.0 | 199.8 | 196.0 | 192.6 | 186.1 | 178.6 |
| | Rate (%) | 100.0 | 97.4 | 95.6 | 93.9 | 90.7 | 87.1 |
| Comparative Example 1 | Discharge capacity (mAh/g) | 205.2 | 200.0 | 196.0 | 192.5 | 185.6 | 177.6 |
| | Rate (%) | 100.0 | 97.4 | 95.3 | 93.8 | 90.4 | 86.5 |
| Comparative Example 2 | Discharge capacity (mAh/g) | 204.9 | 199.2 | 194.4 | 190.2 | 182.8 | 174.1 |
| | Rate (%) | 100.0 | 97.2 | 94.9 | 92.8 | 89.2 | 85.0 |
| Comparative Example 3 | Discharge capacity (mAh/g) | 206.7 | 200.7 | 195.6 | 191.4 | 183.9 | 175.6 |
| | Rate (%) | 100.0 | 97.1 | 94.6 | 92.6 | 89.0 | 84.9 |

Referring to Table 3, it could be confirmed that in the case of the secondary battery to which the positive electrode active materials in Examples 1 and 2 were applied, the rate characteristics were improved as compared with the secondary battery to which the positive electrode active materials in Comparative Examples 1 to 3 were applied.

## Claims

1. A method for preparing a positive electrode active material for a secondary battery, the method comprising:
providing a lithium complex transition metal oxide which contains nickel (Ni) and cobalt (Co), and contains at least one selected from the group consisting of manganese (Mn) and aluminum (Al);
removing lithium by-products present on a surface of the lithium complex transition metal oxide by washing the lithium complex transition metal oxide with water; and
mixing the washed lithium complex transition metal oxide, a cobalt (Co)-containing raw material, and a boron (B)-containing raw material and performing high-temperature heat treatment at a temperature of 600°C or higher.

2. The method of claim 1,
wherein the lithium complex transition metal oxide has a nickel (Ni) content of 60 mol% or more with respect to the total transition metal content.

3. The method of claim 1,
wherein the boron (B)-containing raw material comprises B₄C.

4. The method of claim 1,
wherein the high-temperature heat treatment is performed at 600-900°C in an oxidization atmosphere.

5. The method of claim 1,
wherein the cobalt (Co)-containing raw material is mixed in an amount of 0.001-0.01 parts by weight with respect to 100 parts by weight of the lithium complex transition metal oxide.

6. The method of claim 1,
wherein the boron (B)-containing raw material is mixed in an amount of 0.0001-0.001 parts by weight with respect to 100 parts by weight of the lithium complex transition metal oxide.

7. The method of claim 1,
wherein the lithium complex transition metal oxide is represented by Formula 1 below:
[Formula 1] LiₚNi_{1-(x1+y1+z1)}COₓ₁M^{a}_{y1}M^{b}_{z1}M^{c}_{q1}O₂₋ₐAₐ
in the formula, M^{a} is at least one selected from the group consisting of Mn and Al, M^{b} is at least one selected from the group consisting of Zr, W, Mg, Al, Ce, Hf, Ta, La, Ti, Sr, Ba, Ge, V, Si, Nb, Mo, and Cr, M^{c} is at least one selected from the group consisting of Al, Zr, Ti, Mg, Ta, Nb, Mo, and Cr, A is at least one selected from the group consisting of P and F, 0.9≤p≤1.05, 0<x1≤0.3, 0<y1≤0.2, 0≤z1≤0.1, 0≤q1≤0.1, 0≤a<1, and 0<x1+y1+z1≤0.4.

8. A positive electrode active material for a secondary battery obtainable by the method of claims 1 to 7, the positive electrode active material comprising:
a lithium complex transition metal oxide which contains nickel (Ni) and cobalt (Co), and contains at least one selected from the group consisting of manganese (Mn) and aluminum (Al); and
a surface coating portion which is formed on surfaces of the lithium complex transition metal oxide particles,
wherein the surface coating portion includes a cobalt-rich layer, which has a higher cobalt content than the lithium complex transition metal oxide, and a lithium boron oxide.

9. The positive electrode active material of claim 8,
wherein the lithium complex transition metal oxide has a nickel (Ni) content of 60 mol% or more with respect to the total transition metal content.

10. The positive electrode active material of claim 8,
wherein a difference between a ratio of the number of cobalt (Co) atoms to the sum of the atom numbers of nickel (Ni), cobalt (Co), manganese (Mn), and aluminum (Al) in the cobalt-rich layer and a ratio of the number of cobalt (Co) atoms to the sum of the atom numbers of nickel (Ni), cobalt (Co), manganese (Mn), and aluminum (Al) in the lithium complex transition metal oxide is 0.05-0.2.

11. The positive electrode active material of claim 8,
wherein boron (B) contained in the lithium boron oxide is contained in an amount of 100-1,000 ppm with respect to the total weight of the positive electrode active material.

12. The positive electrode active material of claim 8,
wherein a content of the lithium by-products with respect to the total weight of the positive electrode active material is 0.55 wt% or less.

13. The positive electrode active material of claim 8,
wherein the lithium complex transition metal oxide is represented by Formula 1 below:
[Formula 1] LiₚNi_{1-(x1+y1+z1)}Coₓ₁M^{a}_{y1}M^{b}_{z1}M^{c}_{q1}O₂₋ₐAₐ
in the formula above, M^{a} is at least one selected from the group consisting of Mn and Al, M^{b} is at least one selected from the group consisting of Zr, W, Mg, Al, Ce, Hf, Ta, La, Ti, Sr, Ba, Ge, V, Si, Nb, Mo, and Cr, M^{c} is at least one selected from the group consisting of Al, Zr, Ti, Mg, Ta, Nb, Mo, and Cr, A is at least one selected from the group consisting of P and F, 0.9≤p≤1.05, 0<x1≤0.3, 0<y1≤0.2, 0≤z1≤0.1, 0≤q1≤0.1, 0≤a<1, and 0<x1+y1+z1≤0.4.

14. A positive electrode for a secondary battery, the positive electrode comprising the positive electrode active material according to any one of claims 8 to 13.

15. A lithium secondary battery comprising the positive electrode according to claim 14.

## Patentansprüche

1. Verfahren zur Herstellung eines Positivelektrodenaktivmaterials für eine Sekundärbatterie, wobei das Verfahren folgendes umfasst:
Bereitstellen eines Lithiumkomplex-Übergangsmetalloxids, das Nickel (Ni) und Kobalt (Co) enthält und mindestens eines ausgewählt aus der Gruppe bestehend aus Mangan (Mn) und Aluminium (Al) enthält;
Entfernen von Lithium-Nebenprodukten, die auf einer Oberfläche des Lithiumkomplex-Übergangsmetalloxids vorhanden sind, durch Waschen des Lithiumkomplex-Übergangsmetalloxids mit Wasser; und
Mischen des gewaschenen Lithiumkomplex-Übergangsmetalloxids, eines Kobalt (Co)-haltigen Rohmaterials und eines Bor (B)-haltigen Rohmaterials und Durchführen einer Hochtemperatur-Wärmebehandlung bei einer Temperatur von 600°C oder höher.

2. Verfahren nach Anspruch 1,
bei dem das Lithiumkomplex-Übergangsmetalloxid einen Nickel (Ni)-Gehalt von 60 Mol-% oder mehr, bezogen auf den gesamten Übergangsmetallgehalt, aufweist.

3. Verfahren nach Anspruch 1,
bei dem das Bor (B)-haltige Rohmaterial B₄C umfasst.

4. Verfahren nach Anspruch 1,
bei dem die Hochtemperatur-Wärmebehandlung bei 600-900°C in einer Oxidationsatmosphäre durchgeführt wird.

5. Verfahren nach Anspruch 1,
bei dem das Kobalt (Co)-haltige Rohmaterial in einer Menge von 0,001-0,01 Gewichtsteilen, bezogen auf 100 Gewichtsteile des Lithiumkomplex-Übergangsmetalloxids, gemischt wird.

6. Verfahren nach Anspruch 1,
bei dem das Bor (B)-haltige Rohmaterial in einer Menge von 0,0001-0,001 Gewichtsteilen, bezogen auf 100 Gewichtsteile des Lithiumkomplex-Übergangsmetalloxids, gemischt wird.

7. Verfahren nach Anspruch 1,
bei dem das Lithiumkomplex-Übergangsmetalloxid durch die nachstehende Formel 1 dargestellt wird:
[Formel 1] LiₚNi_{1-(x1+y1+z1)}Coₓ₁M^{a}_{y1}M^{b}_{z1}M^{c}_{q1}O₂₋ₐAₐ
in der Formel ist M^{a} mindestens eines ausgewählt aus der Gruppe bestehend aus Mn und Al, M^{b} ist mindestens eines ausgewählt aus der Gruppe bestehend aus Zr, W, Mg, Al, Ce, Hf, Ta, La, Ti, Sr, Ba, Ge, V, Si, Nb, Mo und Cr, M^{c} ist mindestens eines ausgewählt aus der Gruppe bestehend aus Al, Zr, Ti, Mg, Ta, Nb, Mo und Cr, A ist mindestens eines ausgewählt aus der Gruppe bestehend aus P und F, 0,9≤p≤1,05, 0<x1≤0,3, 0<y1≤0,2, 0≤z1≤0,1, 0≤q1≤0,1, 0≤a<1, und 0<x1+y1+z1≤0,4.

8. Positivelektrodenaktivmaterial für eine Sekundärbatterie, welches nach dem Verfahren der Ansprüche 1 bis 7 erhältlich ist, wobei das Positivelektrodenaktivmaterial folgendes umfasst:
ein Lithiumkomplex-Übergangsmetalloxid, das Nickel (Ni) und Kobalt (Co) enthält und mindestens eines ausgewählt aus der Gruppe bestehend aus Mangan (Mn) und Aluminium (Al) enthält; und
einen Oberflächenbeschichtungsabschnitt, der auf den Oberflächen der Lithiumkomplex-Übergangsmetalloxidteilchen gebildet ist,
wobei der Oberflächenbeschichtungsabschnitt eine Kobaltreiche Schicht, die einen höheren Kobaltgehalt als das Lithiumkomplex-Übergangsmetalloxid aufweist, und ein Lithiumboroxid einschließt.

9. Positivelektrodenaktivmaterial nach Anspruch 8,
wobei das Lithiumkomplex-Übergangsmetalloxid einen Nickel (Ni)-Gehalt von 60 Mol-% oder mehr, bezogen auf den gesamten Übergangsmetallgehalt, aufweist.

10. Positivelektrodenaktivmaterial nach Anspruch 8,
wobei eine Differenz zwischen einem Verhältnis der Anzahl von Kobalt (Co)-Atomen zu der Summe der Atomzahlen von Nickel (Ni), Kobalt (Co), Mangan (Mn) und Aluminium (Al) in der Kobalt-reichen Schicht und einem Verhältnis der Anzahl von Kobalt (Co)-Atomen zu der Summe der Atomzahlen von Nickel (Ni), Kobalt (Co), Mangan (Mn) und Aluminium (Al) in dem Lithiumkomplex-Übergangsmetalloxid 0,05-0,2 beträgt.

11. Positivelektrodenaktivmaterial nach Anspruch 8,
wobei das im Lithiumboroxid enthaltene Bor (B) in einer Menge von 100-1.000 ppm, bezogen auf das Gesamtgewicht des Positivelektrodenaktivmaterials, enthalten ist.

12. Positivelektrodenaktivmaterial nach Anspruch 8,
wobei ein Gehalt der Lithium-Nebenprodukte, bezogen auf das Gesamtgewicht des Positivelektrodenaktivmaterials, 0,55 Gew.-% oder weniger beträgt.

13. Positivelektrodenaktivmaterial nach Anspruch 8,
wobei das Lithiumkomplex-Übergangsmetalloxid durch die nachstehende Formel 1 dargestellt wird:
[Formel 1] LiₚNi_{1-(x1+y1+z1)}Coₓ₁M^{a}_{y1}M^{b}_{z1}M^{c}_{q1}O₂₋ₐAₐ
in der Formel ist M^{a} mindestens eines ausgewählt aus der Gruppe bestehend aus Mn und Al, M^{b} ist mindestens eines ausgewählt aus der Gruppe bestehend aus Zr, W, Mg, Al, Ce, Hf, Ta, La, Ti, Sr, Ba, Ge, V, Si, Nb, Mo und Cr, M^{c} ist mindestens eines ausgewählt aus der Gruppe bestehend aus Al, Zr, Ti, Mg, Ta, Nb, Mo und Cr, A ist mindestens eines ausgewählt aus der Gruppe bestehend aus P und F, 0,9≤p≤1,05, 0<x1≤0,3, 0<y1≤0,2, 0≤z1≤0,1, 0≤q1≤0,1, 0≤a<1, und 0<x1+y1+z1≤0,4.

14. Positive Elektrode für eine Sekundärbatterie, wobei die positive Elektrode das Positivelektrodenaktivmaterial nach mindestens einem der Ansprüche 8 bis 13 umfasst.

15. Lithium-Sekundärbatterie umfassend die positive Elektrode nach Anspruch 14.

## Revendications

1. Procédé de préparation d'un matériau actif d'électrode positive pour une batterie secondaire, le procédé comprenant :
la fourniture d'un oxyde de métal de transition composite de lithium qui contient du nickel (Ni) et du cobalt (Co) et contient au moins un choisi dans le groupe constitué de manganèse (Mn) et d'aluminium (AI) ;
le retrait de produits dérivés de lithium présents sur une surface de l'oxyde de métal de transition composite de lithium par lavage de l'oxyde de métal de transition composite de lithium avec de l'eau ; et
le mélange de l'oxyde de métal de transition composite de lithium lavé, d'une matière première contenant du cobalt (Co) et d'une matière première contenant du bore (B) et la réalisation d'un traitement thermique à haute température à une température de 600 °C ou plus.

2. Procédé selon la revendication 1,
dans lequel l'oxyde de métal de transition composite de lithium a une teneur en nickel (Ni) de 60 % en moles ou plus par rapport à la teneur totale en métal de transition.

3. Procédé selon la revendication 1,
dans lequel la matière première contenant du bore (B) comprend B₄C.

4. Procédé selon la revendication 1,
dans lequel le traitement thermique à haute température est réalisé à 600 à 900 °C dans une atmosphère d'oxydation.

5. Procédé selon la revendication 1,
dans lequel la matière première contenant du cobalt (Co) est mélangée en une quantité de 0,001 à 0,01 partie en poids par rapport à 100 parties en poids de l'oxyde de métal de transition composite de lithium.

6. Procédé selon la revendication 1,
dans lequel la matière première contenant du bore (B) est mélangée en une quantité de 0,0001 à 0,001 partie en poids par rapport à 100 parties en poids de l'oxyde de métal de transition composite de lithium.

7. Procédé selon la revendication 1,
dans lequel l'oxyde de métal de transition composite de lithium est représenté par la Formule 1 :
[Formule 1] LiₚNi_{1-(x1+y1+z1)}Coₓ₁M^{a}_{y1}M^{b}_{z1}M^{c}_{q1}O₂₋ₐAₐ
dans la formule, M^{a} est au moins un choisi dans le groupe constitué de Mn et Al, M^{b} est au moins un choisi dans le groupe constitué de Zr, W, Mg, Al, Ce, Hf, Ta, La, Ti, Sr, Ba, Ge, V, Si, Nb, Mo, et Cr, M^{c} est au moins un choisi dans le groupe constitué de Al, Zr, Ti, Mg, Ta, Nb, Mo, et Cr, A est au moins un choisi dans le groupe constitué de P et F, 0,9≤p≤1,05, 0<x1≤0,3, 0<y1≤0,2, 0≤z1≤0,1, 0≤q1≤0,1, 0≤a<1 et 0<x1+y1+z1≤0,4.

8. Matériau actif d'électrode positive pour une batterie secondaire pouvant être obtenu par le procédé selon les revendications 1 à 7, le matériau actif d'électrode positive comprenant :
un oxyde de métal de transition composite de lithium qui contient du nickel (Ni) et du cobalt (Co) et contient au moins un choisi dans le groupe constitué de manganèse (Mn) et d'aluminium (AI) ; et
une partie de revêtement de surface qui est formée sur des surfaces des particules d'oxyde de métal de transition composite de lithium,
dans lequel la partie de revêtement de surface inclut une couche enrichie en cobalt, qui a une teneur en cobalt supérieure à celle de l'oxyde de métal de transition composite de lithium et un oxyde de bore et de lithium.

9. Matériau actif d'électrode positive selon la revendication 8,
dans lequel l'oxyde de métal de transition composite de lithium a une teneur en nickel (Ni) de 60 % en moles ou plus par rapport à la teneur totale en métal de transition.

10. Matériau actif d'électrode positive selon la revendication 8,
dans lequel une différence entre un rapport du nombre d'atomes de cobalt (Co) à la somme des nombres d'atomes du nickel (Ni), du cobalt (Co), du manganèse (Mn) et de l'aluminium (Al) dans la couche enrichie en cobalt et un rapport du nombre d'atomes de cobalt (Co) à la somme des nombres d'atomes du nickel (Ni), du cobalt (Co), du manganèse (Mn) et de l'aluminium (Al) dans l'oxyde de métal de transition composite de lithium est de 0,05 à 0,2.

11. Matériau actif d'électrode positive selon la revendication 8,
dans lequel le bore (B) contenu dans l'oxyde de bore et de lithium est contenu en une quantité de 100 à 1000 ppm par rapport au poids total du matériau actif d'électrode positive.

12. Matériau actif d'électrode positive selon la revendication 8,
dans lequel une teneur des produits dérivés du lithium par rapport au poids total du matériau actif d'électrode positive est de 0,55 % en poids ou moins.

13. Matériau actif d'électrode positive selon la revendication 8,
dans lequel l'oxyde de métal de transition composite de lithium est représenté par la Formule 1 :
[Formule 1] LiₚNi_{1-(x1+y1+z1)}Coₓ₁M^{a}_{y1}M^{b}_{z1}M^{c}_{q1}O₂₋ₐAₐ
dans la formule ci-dessus, M^{a} est au moins un choisi dans le groupe constitué de Mn et Al, M^{b} est au moins un choisi dans le groupe constitué de Zr, W, Mg, Al, Ce, Hf, Ta, La, Ti, Sr, Ba, Ge, V, Si, Nb, Mo, et Cr, M^{c} est au moins un choisi dans le groupe constitué de Al, Zr, Ti, Mg, Ta, Nb, Mo, et Cr, A est au moins un choisi dans le groupe constitué de P et F, 0,9≤p≤1,05, 0<x1≤0,3, 0<y1≤0,2, 0≤z1≤0,1, 0≤q1≤0,1, 0≤a<1 et 0<x1+y1+z1≤0,4.

14. Électrode positive pour une batterie secondaire, l'électrode positive comprenant le matériau actif d'électrode positive selon l'une quelconque des revendications 8 à 13.

15. Batterie secondaire au lithium comprenant l'électrode positive selon la revendication 14.
